# EUROPÄISCHE PATENTANMELDUNG

(11) **EP 1 449 739 A2**
(43) Veröffentlichungstag der Anmeldung: **25.08.2004**
(21) Anmeldenummer: 04001151.2
(22) Anmeldetag: 21.01.2004
(51) Int. Cl.: B62B 3/18

(54) **Einrichtung zur Erleichterung der Entnahme von Waren aus einem Einkaufswagen und mit dieser verwendbarer Einkaufwagen**

(30) Priorität: 20.02.2003 DE 10307198
(71) Anmelder: Wincor Nixdorf International GmbH, 33106 Paderborn (DE)
(72) Erfinder: Baitz, Guenter, 13629 Berlin (DE); Kamin, Hartmut, 10585 Berlin (DE); Blecke, Michael, 13589 Berlin (DE)

(57) **Zusammenfassung**

Die Erfindung betrifft eine Einrichtung zur Erleichterung der Entnahme von Waren (44) aus einem Einkaufswagen (14) mit einer Hebevorrichtung für den Einkaufswagen (14') oder zumindest für dessen Boden. Ein Einkaufswagen (14'), der zur Verwendung mit der Einrichtung geeignet ist, umfasst wenigstens eine Vorderwand (38) und/oder wenigstens eine Seitenwand, deren oberer Teil (36, 40) nach außen klappbar ist.

## Beschreibung

Die Erfindung betrifft eine die Entnahme von Waren aus einem Einkaufswagen erleichternde Einrichtung und einen mit dieser verwendbaren Einkaufswagen.

In einem Einkaufswagen werden von den Kunden eines Warenhauses die zu erwerbenden Waren gesammelt und anschließend zu einem Kassenplatz transportiert. Hier müssen die Waren dem Einkaufswagen einzeln entnommen und einer Warenerfassung zugeführt werden. Dies kann durch den Kunden oder durch eine Kassierperson erfolgen. Die meisten Einkaufswagen haben zur Verwirklichung eines auch für umfangreiche Einkäufe genügenden Fassungsvermögens eine große Korbtiefe. Dies führt dazu, dass die Entnahme der Waren schwierig ist.

Aufgabe der Erfindung ist es daher, eine die Entnahme von Waren aus einem Einkaufswagen erleichternde Einrichtung vorzuschlagen sowie einen mit dieser verwendbaren Einkaufswagen.

Die Aufgabe wird durch die Merkmale des Anspruchs 1 gelöst.

Durch das Anheben des Einkaufswagens oder zumindest von dessen Boden gelangen die in dem Einkaufswagen befindlichen Waren in den Greifbereich sowohl eines seitlich neben dem Einkaufswagen stehenden Kunden als auch einer an dem Warenerfassungsplatz sitzenden Kassierperson. Der Kunde braucht sich zur Entnahme nicht zu bücken und dann die u.U. schweren Gegenstände zu heben, um sie auf den Erfassungstisch legen zu können. Eine sitzende Person braucht die Arme lediglich auf Tischhöhe auszustrecken.

Entsprechend einer bevorzugten Ausbildung der erfindungsgemäßen Einrichtung umfasst die Hebevorrichtung einen Ausleger, der in einer Aufnahmestellung dazu bestimmt ist, einen an einem Aufnahmeort auf dem Fußboden stehenden Einkaufswagen zu untergreifen und in einer angehobenen Stellung den Einkaufswagen oder dessen Boden auf das Niveau des Ablageoder Erfassungstisches zu heben.

Vorzugsweise umfasst die Einrichtung eine durch einen Motor drehbare senkrecht angeordnete Gewindespindel, und der Ausleger ist über eine mit der Gewindespindel in Eingriff stehende Spindelmutter höhenverstellbar.

Bei einem zur Verwendung mit der vorbeschriebenen Einrichtung geeigneten Einkaufswagen gemäß einem ersten Ausführungsbeispiel ist wenigstens ein oberer Teil der Seitenwände nach außen klappbar. Dadurch liegen die Waren frei vor dem Kunden bzw. der Kassierperson und müssen nicht über eine Seitenwand gehoben werden. Die nach außen geklappten Seitenwände verhindern dabei das Herunterfallen von Gegenständen.

Bei einem zur Verwendung mit der vorbeschriebenen Einrichtung geeigneten Einkaufswagen gemäß einem zweiten Ausführungsbeispiel ist dessen Boden höhenverschieblich. Der Einkaufswagen selbst kann dann seine niedere Position beibehalten. Bei diesem Ausführungsbeispiel eines Einkaufswagens wird ebenfalls das Heben von Gegenständen über die Seitenwände vermieden.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert. Es zeigt
- Fig. 1: eine schematische Seitenansicht eines Erfassungstisches mit einer Hebevorrichtung in Aufnahmestellung und eines Einkaufswagens,
- Fig. 2: den Erfassungstisch aus Fig. 1 mit einem durch die Hebevorrichtung angehobenen Einkaufswagen gemäß einem ersten Ausführungsbeispiel,
- Fig. 3: einen Schnitt durch den in Fig. 2 dargestellten Einkaufswagen entlang der Linie III-III in Fig. 2,
- Fig. 4: den Erfassungstisch aus Fig. 1 mit einem durch die Hebevorrichtung angehobenen Einkaufswagen gemäß einem zweiten Ausführungsbeispiel.

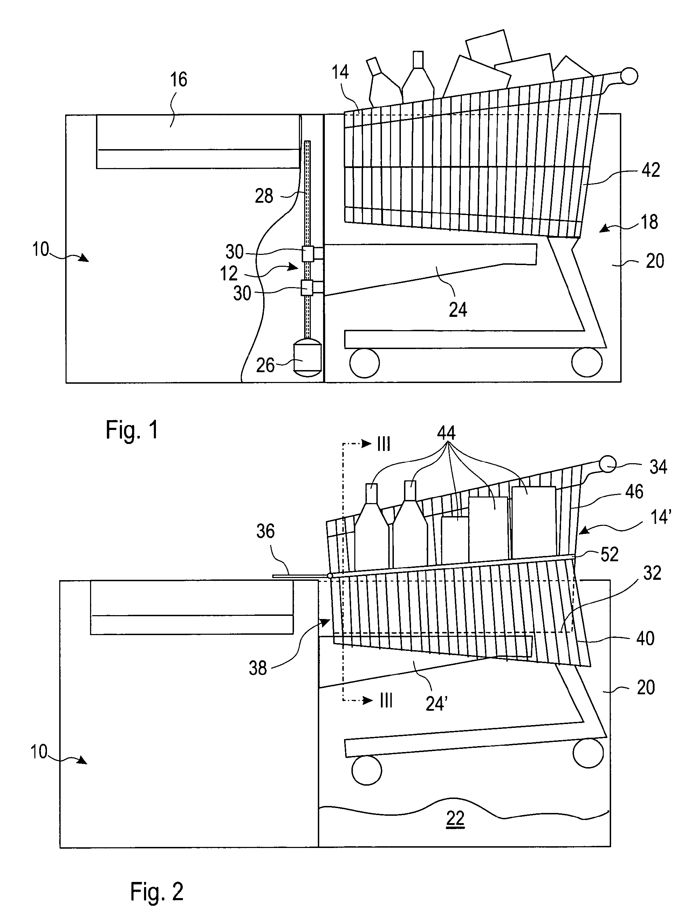

In Fig. 1 ist ein Erfassungstisch 10 mit einer darin eingebauten Hebevorrichtung 12 in einer Aufnahmestellung für einen Einkaufswagen 14 in einer teilweise geschnittenen Seitenansicht dargestellt. In den Erfassungstisch 10 ist ein Strichkodeleser 16 eingebaut. Seitlich neben dem Erfassungstisch 10 ist eine Aufnahmebox 18 für den Einkaufswagen 14 angeordnet. Die Aufnahmebox 18 ist durch den Einkaufswagen 14 seitlich einschließende Wände 20, 22 begrenzt.

Ein zu der Hebevorrichtung 12 gehörender Ausleger 24 ragt in die Aufnahmebox 18 hinein. Die Hebevorrichtung 12 umfasst ferner eine durch einen Motor 26 drehbare senkrecht angeordnete Gewindespindel 28 und zwei mit dieser in Eingriff stehende an dem Ausleger 24 angebrachte Spindelmuttern 30.

Fig. 2 zeigt den Erfassungstisch 10 mit einem durch die Hebevorrichtung 12 angehobenen, gemäß einer ersten Ausführungsform der Erfindung gestalteten ersten Einkaufswagen 14'. Der Ausleger ist in eine mit 24' bezeichnete obere Stellung gefahren, in der er den Boden 32 des ersten Einkaufswagens 14' untergriffen und den ganzen ersten Einkaufswagen 14' angehoben hat. Ein oberer Teil 36 einer einer Handgriffstange 34 gegenüber liegenden vorderen Gitterwand 38 und ein oberer Teil 40 der linken Seitenwand 42 (Fig. 1) sind heruntergeklappt, so dass auf die in dem ersten Einkaufswagen 14' befindlichen Artikel 44 leicht zugegriffen werden kann. Der obere Teil 36 der vorderen Gitterwand 38 kommt dabei auf dem Erfassungstisch 10 so zu liegen, dass eine Lücke zwischen diesem und dem ersten Einkaufswagen 14' vermieden wird. Der obere Teil 40 der linken Seitenwand 42 hängt dabei über die linke Wand 22 der Aufnahmebox 18 herüber und nach unten. Die rechte Seitenwand 46 des ersten Einkaufswagens 14' ist in gleicher Weise aufgebaut, so dass ein Kunde rechts oder links neben der Aufnahmebox 18 stehen kann.

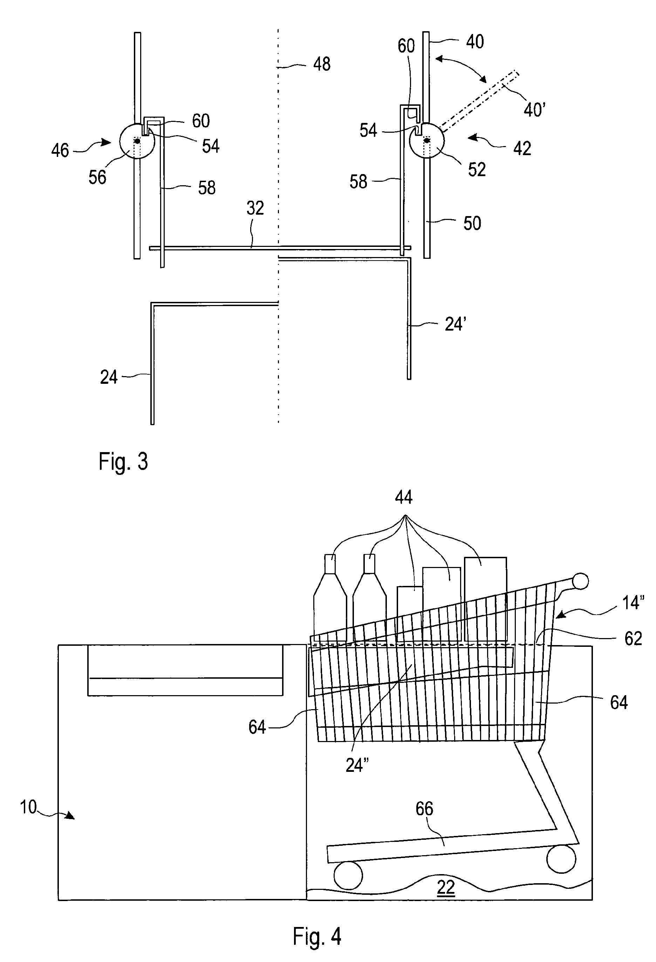

Fig. 3 zeigt einen Schnitt durch den ersten Einkaufswagen 14' und den Ausleger 24 entlang der Linie III-III in Fig. 2. Dabei ist der Ausleger 24 links einer Mittellinie 48 in der Aufnahmestellung und rechts in der angehobenen Stellung 24' dargestellt. Die linke Seitenwand 42 des ersten Einkaufswagens 14' besteht aus einem feststehenden rechten Unterteil 50 und dem bereits erwähnten oberen Teil 40. Letzterer ist an einer linken Welle 52 angebracht, die ihrerseits um die Oberkante des rechten Unterteils 50 drehbar ist. In die linke Welle 52 ist eine axial ausgerichtete gegenüber der Wellenachse zum Wageninneren hin verlagerte Nut 54 eingelassen. Parallel zu dem Unterteil 50 der linken Seitenwand 42 ist eine Riegelstange 58 höhenverschieblich an dem ersten Einkaufswagen 14' angeordnet. Ihr oberes Ende ist hakenförmig zu einem Riegel 60 nach unten zurückgebogen. In gleicher Weise ist die recht Seitenwand 46 aufgebaut, deren rechte Welle 56 spiegelbildlich zu der linke Welle 52 gestaltet ist.

Befindet sich der Ausleger 24 in der Aufnahmestellung (Fig. 1), so greift der Riegel 60 in die Nut 54 ein und blockiert die Drehung der Welle, wie dies in Fig. 3 bei der rechten Welle 56 dargestellt ist. Wird der Ausleger in seine angehobene Stellung 24' gebracht, so hebt er die Riegelstange 58 an und der Riegel 60 wird aus der Nut 54 gehoben. Dies wird in Fig. 3 bei der linken Seitenwand 42 des ersten Einkaufswagens 14' verdeutlicht. Der obere Teil 40 der linken Seitenwand 42 kann nun, wie bei 40' gezeigt, nach außen geschwenkt werden. In gleicher Weise wird mit der vorderen Gitterwand 38 verfahren.

Ist der erste Einkaufswagen 14' entleert, kann er durch Absenken des Auslegers 24 wieder herunter gefahren werden. Dabei gleiten die nach außen geklappten Wandteile 36, 40 an dem Erfassungstisch 10 bzw. an den Wänden 20, 22 der Aufnahmebox 18 entlang und werden dadurch in ihre geschlossene Position zurück geschwenkt, bis die Riegel 60 in die Nute 54 einrasten.

Fig. 4 zeigt den Erfassungstisch 10 mit einem durch die Hebevorrichtung 12 angehobenen, gemäß einer zweiten Ausführungsform der Erfindung gestalteten zweiten Einkaufswagen 14". Der Ausleger ist in eine mit 24" bezeichnete obere Stellung gefahren, in der er den Boden 62 des zweiten Einkaufswagens 14" untergriffen und angehoben hat. Der zweite Einkaufswagen 14" wird dabei nur so weit angehoben, dass der Boden 62 mit der Oberseite des Erfassungstisches 10 eine Ebene bildet. Dadurch können die Artikel 44 auf den Erfassungstisch 10 geschoben werden ohne sie anheben zu müssen.

Die Wände 64 des zweiten Einkaufswagens 14" sind im Unterschied zu denen des ersten Einkaufswagen 14' einstückig ausgebildet und starr mit dem Fahrgestell 66 verbunden. Es ist von Vorteil, das Innere des zweiten Einkaufswagens 14", also den Packraum für die Artikel 44 mit einer nicht dargestellten, insbesondere durchsichtigen flexiblen Folie oder einem Foliebeutel auszukleiden. Dadurch wird vermieden, dass evtl. durch die üblicherweise als Gitter ausgebildeten Wände 64 ragende Artikel beim Anheben des Bodens 62 zerquetscht werden. Dies hat auch zugleich hygienische und Arbeitszeit sparende Vorteile: Von Zeit zu Zeit kann die Folie bzw. der Folienbeutel einfach ausgetauscht werden. Auch kann ein Folienbeutel dem Kunden als Tragetasche angeboten werden. Alternativ dazu können die Wände 64 aus einem vorzugsweise durchsichtigen flächigen Material bestehen.

Ein mit Artikeln 44 bepackter Einkaufswagen 14' oder 14" wird in eine leere Aufnahmebox 18 geschoben, in der der Ausleger 24 in Aufnahmeposition steht. Befindet sich der Einkaufswagen 14' bzw. 14" an dem mit Blick auf die Unfallsicherheit vorschriftsmäßigen Aufnahmeort innerhalb der Aufnahmebox 18, was durch nicht dargestellte Grenzschalter oder Lichtschranken ermittelt werden kann, wird die Hebevorrichtung 12 freigegeben. Durch Betätigen eines ebenfalls nicht dargestellten Befehlstasters wird der Motor 26 in Heberichtung bestromt und der Einkaufswagen 14' bzw. 14" wird angehoben. Durch nur kurzzeitiges Betätigen des Befehlstasters kann dabei jede beliebige Höhe zwischen der Aufnahmeposition und einer maximalen Höhe eingestellt werden. Dadurch ist es möglich, zunächst eine obere Lage von Artikeln 44 aus dem Einkaufswagen 14' bzw. 14" zu nehmen und anschließend den ersten Einkaufswagen 14' bzw. den Boden 62 des zweiten Einkaufswagens 14" weiter anzuheben, so dass immer eine ergonomisch günstige Arbeitsposition eingenommen werden kann. Nach dem Entleeren des Einkaufswagens 14' bzw. 14", was z.B. aus dem Betätigen einer mit "Letzter Artikel" bezeichneten Taste an dem Erfassungstisch 10 oder einer Rechnungsabschlusstaste an einer Registrierkasse abgeleitet wird, wird der Einkaufswagen 14' bzw. 14" abgesenkt und kann danach aus der Aufnahmebox 18 genommen werden.

## Patentansprüche

1. Einrichtung zur Erleichterung der Entnahme von Waren (44) aus einem Einkaufswagen (14, 14', 14") mit einer Hebevorrichtung (12) für den Einkaufswagen (14, 14', 14") oder zumindest für dessen Boden (62).

2. Einrichtung nach Anspruch 1, deren Hebevorrichtung (12) an einem Ablage- oder Erfassungstisch (10) für die Waren (44) angeordnet ist.

3. Einrichtung nach Anspruch 2, deren Hebevorrichtung (12) einen Ausleger (24) umfasst, der in einer Aufnahmestellung dazu bestimmt ist, einen an einem Aufnahmeort auf dem Fußboden stehenden Einkaufswagen (14, 14', 14") zu untergreifen und in einer angehobenen Stellung den Einkaufswagen (14') oder dessen Boden (62) auf das Niveau des Ablage- oder Erfassungstisches (10) zu heben.

4. Einrichtung nach Anspruch 3, deren Hebevorrichtung (12) eine durch einen Motor (26) drehbare senkrecht angeordnete Gewindespindel (28) umfasst und deren Ausleger (24) über eine mit der Gewindespindel (28) in Eingriff stehende Spindelmutter (30) höhenverstellbar ist.

5. Einrichtung nach einem der vorhergehenden Ansprüche, bei der der Aufnahmeort seitlich von dem Schutz der Kunden dienenden Wänden (22, 24) umgeben ist.

6. Einkaufswagen (14'), der zur Verwendung mit einer Einrichtung nach einem der Ansprüche 1 bis 5 geeignet ist, bei dem wenigstens ein oberer Teil (36, 40) einer Vorderwand (38) und/oder wenigstens einer Seitenwand (42, 46) nach außen klappbar ist.

7. Einkaufswagen nach Anspruch 6, mit einer Verriegelung (54, 58, 60) für den klappbaren Teil (36, 40) der Wände (38, 42, 46), die durch die Hebevorrichtung (12) entriegelbar ist.

8. Einkaufswagen (14"), der zur Verwendung mit einer Einrichtung nach einem der Ansprüche 1 bis 5 geeignet ist, dessen Boden (62) höhenverschieblich ist.

9. Einkaufswagen (14") nach einem der Ansprüche 6 bis 8, dessen Seitenwände aus einem insbesondere durchsichtigen flächigen Material bestehen.

10. Einkaufswagen (14") nach einem der Ansprüche 6 bis 8, dessen Packraum mit einer insbesondere durchsichtigen flexiblen Folie oder einem Folienbeutel ausgekleidet ist.
